# EUROPEAN PATENT SPECIFICATION

(11) **EP 3 015 684 B1**
(45) Date of publication and mention of the grant of the patent: **17.08.2022**
(21) Application number: 14817837.9
(22) Date of filing: 21.05.2014
(51) Int. Cl.: F02D 41/10, F02B 37/00, F02D 21/08, F02D 45/00

(54) **DIESEL ENGINE AND METHOD OF CONTROLLING SAME**
DIESELMOTOR UND STEUERUNGSVERFAHREN DAFÜR
MOTEUR DIESEL ET PROCÉDÉ DE COMMANDE ASSOCIÉ

(30) Priority: 27.06.2013 JP 2013134851
(43) Date of publication of application: 04.05.2016
(73) Proprietor: Isuzu Motors, Ltd., Shinagawa-Ku Tokyo 140-8722 (JP)
(72) Inventor: NODA, Kunio, Fujisawa-shi Kanagawa 252-0881 (JP)
(74) Representative: WSL Patentanwälte Partnerschaft mbB
(86) International application number: PCT/JP2014/063463
(87) International publication number: WO 2014/208221

(56) References cited:
- EP-A2- 0 985 812
- WO-A1-2010/085181
- WO-A1-2012/150619
- JP-A- S63 143 343
- JP-A- 2003 021 002
- JP-A- 2005 113 825
- JP-A- 2007 051 566
- JP-A- 2008 175 170
- JP-A- 2008 240 630
- JP-A- 2011 256 849
- JP-A- 2011 256 849
- US-A1- 2004 182 372

## Description

### TECHNICAL FIELD

The present invention relates to a diesel engine and a method of controlling the same that can avoid unnecessary rise of a rotational speed of a turbocharger at the time of accelerating the engine, and can prevent trouble of the turbocharger, in the diesel engine comprising a turbocharging system and an EGR system.

### BACKGROUND ART

From a viewpoint of conservation of global environment, exhaust gas regulation of automobiles is progressing further. Particularly, reduction of particulate matter (PM) and nitrogen oxides (NOx) is required in a diesel engine mounted on a vehicle, and in the NOx reduction, EGR (exhaust gas recirculation) is performed that reduces a generation amount of NOx by recirculating into a cylinder a part of exhaust gas discharged from the cylinder, and lowering a combustion temperature in the cylinder.

In addition, in the diesel engine, a turbocharger is comprised, and turbocharging is performed in which a turbine provided in an exhaust passage is driven by energy of exhaust gas, an intake air is compressed by a compressor coupled to the turbine and provided in an intake passage, an air amount sent into the cylinder is increased, and in which combustion efficiency is improved.

As for a relation between the turbocharging and the EGR, for example, as is described in Japanese patent application Kokai publication No. 2007-85258, a supercharging pressure control device of an internal combustion engine in a gasoline engine of an internal EGR system has been proposed, in which: at the time of turbocharging, EGR is performed or an EGR amount is more increased as compared with a time when an EGR amount at the time of supercharging is not supercharged; thereby a part of energy of a current cycle in a cylinder is used in next and subsequent cycles; a total amount of energy, and energy of exhaust gas are increased in the next and subsequent cycles to increase a rotational speed of a turbocharger; thereby a supercharging pressure is raised more promptly; and hereby enhancing responsiveness of the supercharging pressure rise in the turbocharger to suppress deterioration of drivability.

Meanwhile, in the diesel engine, when a fuel injection amount into the cylinder is increased to accelerate the engine, control is performed in which: in order to improve engine acceleration performance, an EGR valve is closed, a part of exhaust gas discharged from the cylinder is made not to flow into an EGR passage, and all the exhaust gas discharged from the cylinder is made to flow into the turbocharger; thereby an exhaust gas flow rate to the turbocharger is increased to assist rise of the rotational speed of the turbocharger; thereby rise of a boost pressure is promoted to increase a supply amount of a fresh air into the cylinder and improve the engine acceleration performance.

However, in this control, since determination of whether to close the EGR valve is performed only by whether or not the engine is in an acceleration state, i.e., only by whether or not the fuel injection amount is rapidly increased, control is performed in which the EGR valve is closed regardless of the rotational speed of the turbocharger, so that the rotational speed is further raised.

Therefore, when the fuel injection amount is increased, and the EGR valve is closed, in accordance with a request for engine acceleration, in a state where the rotational speed of the turbocharger is already high in accelerating the engine, there arises a problem that an exhaust gas amount flowing into the turbocharger is rapidly increased, the rotational speed of the turbocharger rapidly rises exceeding an allowable rotational speed, and the turbocharger breaks down. US 2004/182372 A1 relates to a valve operator position, which is determined for an exhaust gas recirculation valve or an internal combustion engine. The valve position may be adjusted for transient engine speed conditions and/or adjusted for transient engine load conditions. During high transient states, the EGR valve is closed more, to allow more air to reach the cylinders of the engine, thereby improving engine performance.

WO 2012/150619 A1 relates to an internal combustion engine operation control method which is capable of temporarily stopping an internal combustion engine in accordance with a stop request to the internal combustion engine, which is fitted with an exhaust gas recirculation apparatus, and starting the internal combustion engine again in accordance with a start request to the internal combustion engine, and comprises: putting an EGR control valve and an open/close valve in a fully closed state when the internal combustion engine is in an accumulation-enabled operation state in which EGR gas can be accumulated in an EGR channel between the EGR control valve and the open/close valve; switching the open/close valve to a fully opened state when an intake pressure guided from an intake channel to the internal combustion engine exceeds an intake pressure target value which is set on the basis of the operation state of the internal combustion engine; switching the open/close valve to the fully closed state again after a predetermined time; and temporarily storing high-pressure EGR gas with low oxygen concentration in the EGR channel.

JP 2011/256849 A relates to an exhaust emission control system. The exhaust emission control system includes an EGR control unit controlling opening of an EGR valve on basis of an engine rotation speed and a fuel injection amount; a boost pressure sensor detecting a boost pressure; a target boost pressure calculation unit obtaining a target boost pressure on basis of the engine rotation speed and the fuel injection amount; and an EGR valve opening correction unit correcting the opening of the EGR valve on basis of a difference between the target boost pressure obtained by the target boost pressure calculation unit and the boost pressure detected by the boost pressure sensor.

### PRIOR ART DOCUMENT

### PATENT DOCUMENTS

Patent Document 1: Japanese patent application Kokai publication No. 2007-85258
Patent Document 2: United States patent application US 2004/182372 A1
Patent Document 3: International patent application WO 2012/150619 A1
Patent Document 4: Japanese patent application JP 2011 256849 A

### SUMMARY OF THE INVENTION

### PROBLEM TO BE SOLVED BY THE INVENTION

The present invention has been made in view of the above-described circumstances, and an object thereof is to provide a diesel engine and a method of controlling the same that can confine an exhaust gas amount flowing into a turbocharger within a proper range in accelerating the engine, hereby, can avoid a rotational speed of the turbocharger from rising exceeding an allowable rotational speed in accelerating the engine, and can prevent trouble of the turbocharger, in the diesel engine comprising a turbocharging system and an EGR system.

### MEANS FOR SOLVING THE PROBLEMS

A diesel engine of the present invention for achieving the above-described object is the diesel engine comprising a turbocharging system and an EGR system, wherein the diesel engine has: a fuel injection amount detection unit; a boost pressure detection unit; an engine operation state detection unit; and an EGR control unit, and that the EGR control unit configured to close an EGR valve to stop EGR, when the vehicle accelerates and in case an increased value of a fuel injection amount detected by the fuel injection detection unit is larger than a preset first threshold value, a boost pressure detected by the boost pressure detection unit is lower than a preset second threshold value, and an engine operation state detected by the engine operation state detection unit is outside a preset high rotation and high load operation state region, wherein the EGR control unit is further configured to open the EGR valve and to release stopping of the EGR in case the boost pressure detected by the boost pressure detection unit is higher than the preset second threshold.

According to this configuration, in the acceleration of the engine, while an operation state of a turbocharger is determined based on not only the increased amount of the fuel injection amount but also the determination of the boost pressure and the engine operation state, whether EGR is performed or stopped is determined, and stopping the EGR is released when the rotational speed of the turbocharger may be not less than the allowable rotational speed. Therefore, in the acceleration of the engine, an exhaust gas amount flowing into the turbocharger can be confined within a proper range, and hereby, the rotational speed of the turbocharger can be avoided from rising exceeding the allowable rotational speed in the acceleration of the engine, and trouble of the turbocharger can be prevented.

In the above-described diesel engine, when the second threshold value is set based on an engine speed and the fuel injection amount in the EGR control unit, determination of whether or not the rotational speed of the turbocharger may be not less than the allowable rotational speed can be made more accurately in the current acceleration of the engine, EGR can be stopped almost to the limit where the rotational speed of the turbocharger does not exceed the allowable rotational speed, and fuel consumption can be improved, while suppressing a generation amount of NOx in exhaust gas.

Additionally, a method of controlling a diesel engine for achieving the above-described object is the method of controlling the diesel engine comprising a turbocharging system and an EGR system, wherein the method includes the step of closing an EGR valve to stop EGR, when the vehicle accelerates and in case an increased value of a fuel injection amount is larger than a preset first threshold value, a boost pressure is lower than a preset second threshold value, and an engine operation state is outside a preset high rotation and high load operation state region, wherein in case the boost pressure is higher than the preset second threshold the EGR valve is opened and stopping of EGR is released.

According to this method, since whether EGR is performed or stopped is determined, while observing not only the change of the fuel injection amount but the boost pressure and the engine operation state, EGR can be stopped when the rotational speed of the turbocharger may be not less than the allowable rotational speed. As a result of this, in the acceleration of the engine, since the exhaust gas amount flowing into the turbocharger can be confined within the proper range, the rotational speed of the turbocharger is avoided from rising exceeding the allowable rotational speed and trouble of the turbocharger can be prevented.

Note that although the first threshold value and the second threshold value, and the high rotation and high load operation state region in this case change with specifications of the diesel engine and specifications of the turbocharger, can be set by a result of a previously conducted experiment, etc., and are related to the engine speed, the fuel injection amount, etc., they can be set in forms, such as a numerical value, a function value, and map data.

### EFFECT OF THE INVENTION

According to the diesel engine and the method of controlling the same according to the present invention, in the diesel engine equipping the turbocharging system and the EGR system, in the acceleration of the engine, whether EGR is performed or stopped is determined, while observing not only the change of the fuel injection amount but the boost pressure and the engine operation state, thus, the exhaust gas amount flowing into the turbocharger can be confined within the proper range, hereby, the rotational speed of the turbocharger is avoided from rising exceeding the allowable rotational speed in the acceleration of the engine, and trouble of the turbocharger can be prevented.

### BRIEF DESCRIPTION OF THE DRAWINGS

[Fig. 1] Fig. 1 is a diagram schematically showing a configuration of a diesel engine including a turbocharging system and an EGR system of an embodiment of the present invention.
[Fig. 2] Fig. 2 is a flowchart showing one example of a control flow of a method of controlling the diesel engine of the embodiment of the present invention.
[Fig. 3] Fig. 3 is a diagram showing a configuration of a control device of the diesel engine of the embodiment of the present invention.
[Fig. 4] Fig. 4 is a graph schematically showing regions Ra and Rb in which an EGR valve is not closed and a region Rc in which the EGR valve is closed in acceleration of the engine, in the method of controlling the diesel engine of the embodiment of the present invention.

### MODES FOR CARRYING OUT THE INVENTION

Hereinafter, a diesel engine and a method of controlling the same of an embodiment according to the present invention will be explained with reference to drawings. Here, although the diesel engine is exemplified that has an EGR system in which a part of an EGR passage is provided in a cylinder head, the present invention is not limited to this, and the system may be an external EGR system or may be an internal EGR system.

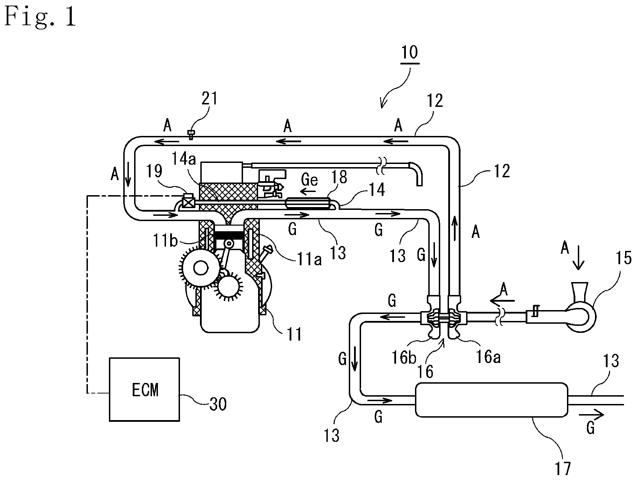

As shown in Fig. 1, a diesel engine 10 of the embodiment according to the present invention is configured to have an engine body 11, an intake passage 12, an exhaust passage 13 and an EGR passage 14. A plurality of cylinders 11a, pistons 11b, etc. are provided with the engine body 11, and an air cleaner 15, an intake amount sensor that is not shown, and a compressor 16a of a turbocharger 16 are provided in the intake passage 12 in order from an upstream side.

In addition, a turbine 16b of the turbocharger 16, and an exhaust gas purification device 17 are provided in the exhaust passage 13 in order from the upstream side. The EGR passage 14 branches from the exhaust passage 13 between the engine body 11 and the turbine 16b, and joins the intake passage 12 between the compressor 16a and the engine body 11 through an EGR cooler 18, an internal EGR passage 14a provided inside a cylinder head 11c, and an EGR valve 19.

The exhaust gas purification device 17 is a post-treatment device for purifying PM (particulate matter) and NOx (nitrogen oxides) in exhaust gas G discharged from the engine body 11, and composes a combination of some exhaust gas purification units, such as a pre-stage oxidation catalyst device, a PM capturing filter device, an NOx occlusion reduction type catalyst device, a urea supply nozzle, and a urea SCR device.

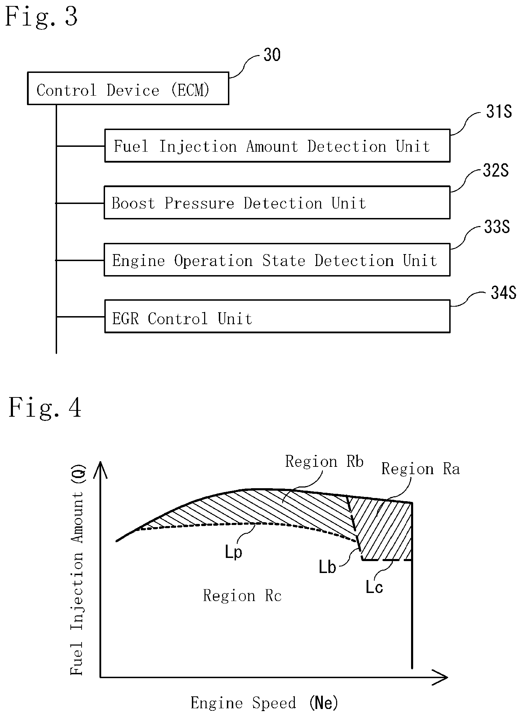

In addition, a control device (an ECM: an engine control module) 30 that controls the whole operation of the diesel engine 10 is provided, and as shown in Fig. 3, the control device 30 is configured to have a fuel injection amount detection unit 31S, a boost pressure detection unit 32S, an engine operation state detection unit 33S and an EGR control unit 34S.

Additionally, the EGR control unit 34S is configured to close the EGR valve 19 to thereby stop EGR, when in acceleration of the engine, an increased amount ΔQ of a fuel injection amount Q detected by the fuel injection amount detection unit 31S is larger than a preset first threshold value ΔQc, and when the boost pressure detection unit 32S has a boost pressure sensor 21 arranged in the intake passage 12 and a boost pressure Pb detected by the boost pressure sensor 21 is lower than a preset second threshold value Pbc, and when the engine operation state detection unit 33S inputs values of an engine speed Ne and the fuel injection amount Q and an engine operation state detected with reference to map data etc. indicating an engine operation region by the engine speed Ne and the fuel injection amount Q is outside a preset high rotation and high load operation state region Ra.

Note that since the first threshold value ΔQc and the second threshold value Pbc, and the high rotation and high load operation state region in this case change with specifications of the diesel engine 10 and specifications of the turbocharger 16, they are values preset by an experiment etc.

The first threshold value ΔQc is the threshold value for determining whether an engine acceleration state is sudden acceleration or slow acceleration. In addition, the second threshold value Pbc is the value for determining whether a current rotational speed Nt of the turbocharger 16 is high or low by the boost pressure Pb, the second threshold value Pbc is preferably set based on the engine speed Ne and the fuel injection amount Q, i.e., is preferably set to be a value serving as a function of the engine speed Ne and the fuel injection amount Q. And the second threshold value Pbc is the value that can already be set at the time of control by referring to map data etc. preset by an experiment etc. by the engine speed Ne and the fuel injection amount Q at the time of engine operation. In Fig. 4, the second threshold value Pbc is shown by a line Lp between a region Rb and a region Rc.

In addition, the high rotation and high load operation state region (it is shown as the region Ra in Fig. 4) is also the value for determining whether the rotational speed Nt of the turbocharger 16 is high or low, the region is preferably set based on the engine speed Ne and the fuel injection amount Q, i.e., is preferably set to be a value serving as a function of the engine speed Ne and the fuel injection amount Q. And the region is a range that can be set at the time of control by referring to map data etc. preset by the experiment etc. by the engine speed Ne and the fuel injection amount Q at the time of engine operation. In Fig. 4, boundaries of the high rotation and high load operation state region Ra are shown by a line Lb and a line Lc.

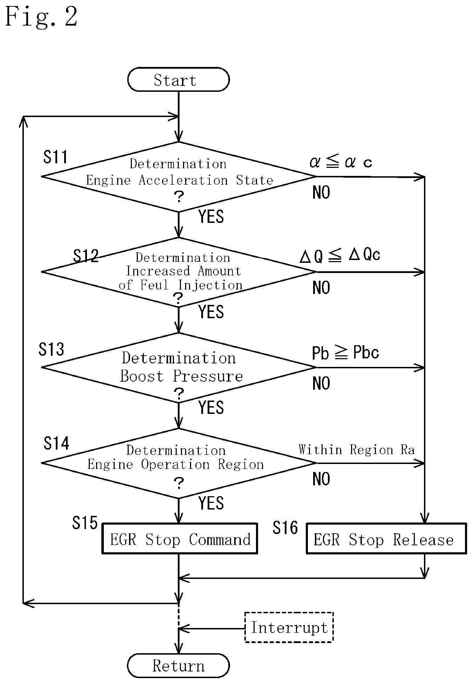

A method of controlling the diesel engine will be explained with reference to a control flow of Fig. 2. The control flow of Fig. 2 is shown as the following control flow. The control flow is repeatedly called by an upper control flow which starts with the operation start of the diesel engine 10, then starts. Then the control flow is executed. Along with the operation stop of the diesel engine 10, the control flow is interrupted and processing returns to the upper control flow. The control flow is stopped along with the stop of the upper control flow.

When the control flow of Fig. 2 is called by the upper control flow and started, it is determined in step S11 whether or not the diesel engine 10 is in an acceleration state. In a case of the diesel engine 10 mounted on a vehicle, the determination is made by whether or not an accelerator opening angle **α** operated by a driver is larger than a preset accelerator opening angle threshold value **α**c. If in the determination in step S11, the accelerator opening angle **α** is larger than the accelerator opening angle threshold value (**α**c, and the diesel engine 10 is in the engine acceleration state (YES), processing proceeds to determination of an increased amount of a fuel injection amount of next step S12, and if the accelerator opening angle **α** is not more than the accelerator opening angle threshold value **α**c, and the diesel engine 10 is not in the engine acceleration state (NO), processing proceeds to EGR stop release of step S16.

In step S12, it is determined whether or not the increased amount **Δ**Q of the fuel injection amount Q is larger than the first threshold value **Δ**Qc, and if it is larger (YES), processing proceeds to determination of a boost pressure of step S13, and if the increased amount **Δ**Q of the fuel injection amount Q is not more than the first threshold value **Δ**Qc (NO), processing proceeds to the EGR stop release of step S16.

In step S13, it is determined whether or not the boost pressure Pb is larger than the second threshold value Pbc with reference to map data from the current engine speed Ne and the fuel injection amount Q, and if it is smaller (YES), processing proceeds to determination of an engine operation region of step S14, and if the boost pressure Pb is not less than the second threshold value Pbc (NO), processing proceeds to the EGR stop release of step S16.

In step S14, it is determined whether or not the engine operation region is outside the high rotation and high load operation state region Ra with reference to map data from the current engine speed Ne and the fuel injection amount Q, and if it is outside the high rotation and high load operation state region Ra (YES), processing proceeds to EGR stop of step S15, and if it is inside the high rotation and high load operation state region Ra (NO), processing proceeds to the EGR stop release of step S16.

In step S15, the EGR valve 19 is closed to stop EGR. In this case, even though currently, EGR control is performed by other control, and a valve opening of the EGR valve 19 is controlled, the control of step S15 takes priority, the EGR valve 19 is closed, and a part Ge of the exhaust gas G is prevented from flowing into the EGR passage 14. Processing then returns to step S11.

Meanwhile, in step S16, in a state where the EGR valve 19 is closed, and where EGR is stopped, in this control, the EGR valve 19 is opened, and the state where EGR is stopped is released. Processing then returns to step S11.

The control of EGR when the EGR stop is released, i.e., control of the valve opening of the EGR valve 19, is performed by EGR control other than the control by the control flow of Fig. 2 and, for example, the control is set based on preset EGR map data etc. based on the engine speed Ne and the fuel injection amount Q. This control is the same as control performed based on a conventional well-known technology.

In the control flow of Fig. 2, steps S11 to S15 or steps S11 to S16 are repeatedly carried out, and an interrupt is generated along with the operation stop of the diesel engine 10, the control flow is interrupted, processing proceeds to a return and returns to the upper control flow, and the control flow is stopped along with the stop of the upper control flow.

By this control, in the method of controlling the diesel engine including the turbocharging system and the EGR system, when in acceleration of the engine, the increased amount ΔQ of the fuel injection amount Q is larger than the preset first threshold value ΔQc, the boost pressure Pb is lower than the preset second threshold value Pbc, and the engine operation state is outside the preset high rotation and high load operation state region Ra, the EGR valve 19 can be closed to stop EGR.

Additionally, according to the diesel engine 10 configured as described above and the method of controlling the same, in the diesel engine 10 including the turbocharging system and the EGR system, in acceleration of the engine, whether EGR is performed or stopped is determined, while observing not only the change of the fuel injection amount Q but the boost pressure Pb and the engine operation state, thus an exhaust gas amount flowing into the turbocharger 16 can be confined within a proper range, hereby, the rotational speed Nt of the turbocharger 16 is avoided from rising exceeding an allowable rotational speed Nta in the acceleration of the engine, and trouble of the turbocharger 16 can be prevented.

### INDUSTRIAL APPLICABILITY

According to the diesel engine and the method of controlling the same according to the present invention, in the diesel engine including the turbocharging system and the EGR system, the rotational speed of the turbocharger is avoided from rising exceeding the allowable rotational speed in acceleration of the engine, trouble of the turbocharger can be prevented, and thus, the present invention can be utilized as a diesel engine mounted on an automobile etc. and a method of controlling the same.

### EXPLANATION OF REFERENCE NUMERALS

- 10: DIESEL ENGINE
- 11: ENGINE BODY
- 11a: CYLINDER
- 11b: PISTON
- 12: INTAKE PASSAGE
- 13: EXHAUST PASSAGE
- 14: EGR PASSAGE
- 14a: INTERNAL EGR PASSAGE
- 15: AIR CLEANER
- 16: TURBOCHARGER
- 16a: COMPRESSOR
- 16b: TURBINE
- 17: EXHAUST GAS PURIFICATION DEVICE
- 18: EGR COOLER
- 19: EGR VALVE
- 21: BOOST PRESSURE SENSOR
- 30: CONTROL DEVICE (ECM)
- 31S: FUEL INJECTION AMOUNT DETECTION UNIT
- 32S: BOOST PRESSURE DETECTION UNIT
- 33S: ENGINE OPERATION STATE DETECTION UNIT
- 34S: EGR CONTROL UNIT
- Ra: HIGH ROTATION AND HIGH LOAD OPERATION STATE REGION
- Rb: REGION (Pb≥Pbc, AND OUTSIDE REGION Ra)
- Rc: REGION (Pb<Pbc, AND OUTSIDE REGION Ra)
- Lp: BOUNDARY (Pbc) OF REGION Rb and REGION Rc
- Lb and Lc: BOUNDARIES OF "REGION Ra and REGION Rb" AND REGION
- Rc Nt: ROTATIONAL SPEED OF TURBOCHARGER
- Nta: ALLOWABLE ROTATIONAL SPEED OF TURBOCHARGER
- Ne: ENGINE SPEED
- Pb: BOOST PRESSURE
- Pbc: SECOND THRESHOLD VALUE
- Q: FUEL INJECTION AMOUNT
- **Δ**Q: INCREASED AMOUNT OF FUEL INJECTION AMOUNT
- **Δ**Qc: FIRST THRESHOLD VALUE
- **α**: ACCELERATOR OPENING ANGLE
- **α**c: ACCELERATOR OPENING ANGLE THRESHOLD VALUE

## Claims

1. A diesel engine (10) comprising a turbocharging system and an EGR system, wherein the diesel engine (10) has:
a fuel injection amount detection unit (31S); a boost pressure detection unit (32S); an engine operation state detection unit (33S); and an EGR control unit (34S), and
wherein the EGR control unit (34S) is configured to close an EGR valve (19) to stop EGR, while the engine (10) accelerates and in case an increased value of a fuel injection amount (ΔQ) detected by the fuel injection detection unit (31S) is larger than a preset first threshold value, a boost pressure (Pb) detected by the boost pressure detection unit (32S) is lower than a preset second threshold value (Pbc), and an engine operation state detected by the engine operation state detection unit (33S) is outside a preset high rotation and high load operation state region (Ra), wherein the EGR control unit (34S) is further configured to open the EGR valve and to release stopping of EGR in case the boost pressure (Pb) detected by the boost pressure detection unit (32S) is higher than the preset second threshold.

2. The diesel engine(10) according to claim 1, **characterized in that** in the EGR control unit (34S), the second threshold value is set based on an engine speed (Ne) and the fuel injection amount (Q).

3. A method of controlling a diesel engine (10) comprising a turbocharging system and an EGR system, wherein the method comprises the step of closing an EGR valve (19) to stop EGR, while the engine (10) accelerates and in case an increased value of a fuel injection amount (ΔQ) is larger than a preset first threshold value, a boost pressure (Pb) is lower than a preset second threshold value (Pbc), and an engine operation state is outside a preset high rotation and high load operation state region (Ra), wherein in case the boost pressure (Pb) is higher than the preset second threshold (Pbc), the EGR valve (19) is opened and stopping of EGR is released.

## Patentansprüche

1. Dieselmotor (10) mit einem Turboladesystem und einem EGR-System, wobei der Dieselmotor (10) aufweist:
eine Kraftstoffeinspritzmengen-Erfassungseinheit (318), eine Ladedruck-Erfassungseinheit (328), eine Motorbetriebszustands-Erfassungseinheit (338), und eine EGR-Steuereinheit (348), und wobei
die EGR-Steuereinheit (348) so konfiguriert ist, dass sie ein EGR-Ventil (19) schließt, um die EGR zu stoppen, während der Motor (10) beschleunigt und falls ein erhöhter Wert einer Kraftstoffeinspritzmenge (ΔQ), der von der Kraftstoffeinspritz-Erfassungseinheit (318) erfasst wird, größer als ein voreingestellter erster Schwellenwert ist, ein Ladedruck (Pb), der von der Ladedruck-Erfassungseinheit (328) erfasst wird, niedriger als ein voreingestellter zweiter Schwellenwert (Pbc) ist und ein Motorbetriebszustand, der von der Motorbetriebszustands-Erfassungseinheit (338) erfasst wird, außerhalb eines voreingestellten hohen Rotations- und Hochlastbetriebszustandsbereichs (Ra), wobei die EGR-Steuereinheit (348) ferner so konfiguriert ist, dass sie das EGR-Ventil öffnet und das Stoppen der EGR aufhebt, wenn der von der Ladedruck-Erfassungseinheit (328) erfasste Ladedruck (Pb) höher als der voreingestellte zweite Schwellenwert ist.

2. Dieselmotor (10) nach Anspruch 1, **dadurch gekennzeichnet, dass** in der EGR-Steuereinheit (348) der zweite Schwellenwert auf der Grundlage einer Motordrehzahl (Ne) und der Kraftstoffeinspritzmenge (Q) eingestellt wird.

3. Verfahren zum Steuern eines Dieselmotors (10), der ein Turboladesystem und ein EGR-System umfasst, wobei das Verfahren den Schritt des Schließens eines EGR-Ventils (19) umfasst, um die EGR zu stoppen, während der Motor (10) beschleunigt und falls ein erhöhter Wert einer Kraftstoffeinspritzmenge (ΔQ) größer als ein voreingestellter erster Schwellenwert ist, ein Ladedruck (Pb) niedriger als ein voreingestellter zweiter Schwellenwert (Pbc) ist und ein Motorbetriebszustand außerhalb eines voreingestellten hohen Rotations- und Hochlastbetriebszustandsbereichs (Ra) liegt, wobei für den Fall, dass der Ladedruck (Pb) höher als der voreingestellte zweite Schwellenwert (Pbc) ist, das EGR-Ventil (19) geöffnet und das Stoppen der EGR freigegeben wird.

## Revendications

1. Un moteur diesel (10) comprenant un système de turbocompression et un système EGR, le moteur diesel (10) ayant :
une unité de détection de quantité d'injection de carburant (31S) ; une unité de détection de pression de suralimentation (32S) ; une unité de détection d'état de fonctionnement de moteur (33S) ; et une unité de commande d'EGR (34S), et l'unité de commande d'EGR (34S) étant configurée pour fermer une vanne EGR (19) afin d'arrêter l'EGR, tandis que le moteur (10) accélère et dans le cas où une valeur accrue d'une quantité d'injection de carburant (ΔQ) détectée par l'unité de détection d'injection de carburant (31S) est supérieure à une première valeur seuil prédéfinie, une pression de suralimentation (Pb) détectée par l'unité de détection de pression de suralimentation (32S) est inférieure à une deuxième valeur seuil prédéfinie (Pbc), et un état de fonctionnement de moteur détecté par l'unité de détection d'état de fonctionnement de moteur (33S) est en dehors d'une région prédéfinie d'état de fonctionnement de rotation élevée et de charge élevée (Ra), l'unité de commande d'EGR (34S) étant en outre configurée pour ouvrir la vanne EGR et pour déclencher l'arrêt de l'EGR dans le cas où la pression de suralimentation (Pb) détectée par l'unité de détection de pression de suralimentation (32S) est supérieure au deuxième seuil prédéfini.

2. Le moteur diesel (10) selon la revendication 1, **caractérisé en ce que** dans l'unité de commande d'EGR (34S), la deuxième valeur seuil est définie sur la base d'une vitesse de moteur (Ne) et la quantité d'injection de carburant (Q).

3. Un procédé de commande d'un moteur diesel (10) comprenant un système de turbocompression et un système EGR, le procédé comprenant l'étape consistant à fermer une vanne EGR (19) afin d'arrêter l'EGR, tandis que le moteur (10) accélère et dans le cas où une valeur accrue d'une quantité d'injection de carburant (ΔQ) est supérieure à une première valeur seuil prédéfinie, une pression de suralimentation (Pb) est inférieure à une deuxième valeur seuil prédéfinie (Pbc), et un état de fonctionnement de moteur est en dehors d'une région prédéfinie d'état de fonctionnement de rotation élevée et de charge élevée (Ra), dans lequel dans le cas où la pression de suralimentation (Pb) est supérieure au deuxième seuil prédéfini (Pbc), la vanne EGR (19) est ouverte et l'arrêt de l'EGR est déclenché.
